# EUROPEAN PATENT APPLICATION

(11) **EP 4 693 253 A1**
(43) Date of publication of application: **11.02.2026**
(21) Application number: 24779044.7
(22) Date of filing: 29.02.2024
(51) Int. Cl.: G08G 1/16, G10L 13/08

(54) **CONTROL DEVICE AND CONTROL METHOD**

(30) Priority: 31.03.2023 WO PCT/JP2023/013592
(71) Applicant: HONDA MOTOR CO., LTD., Tokyo 105-8404 (JP)
(72) Inventor: YASUI , Yuji, Wako-shi, Saitama 351-0193 (JP); YAMADA, Kentaro, Wako-shi, Saitama 351-0193 (JP); MITSUHASHI, Ryota, Wako-shi, Saitama 351-0193 (JP); TANAKA, Toshiyuki, Wako-shi, Saitama 351-0193 (JP); SAKATA, Sachie, Wako-shi, Saitama 351-0193 (JP)
(74) Representative: Weickmann & Weickmann PartmbB
(86) International application number: PCT/JP2024/007567
(87) International publication number: WO 2024/202905

(57) **Abstract**

A control apparatus in the present embodiment is a control apparatus disposed in a moving body including an image capturing device, the control apparatus comprising: image acquisition means for acquiring an image of an outside of the moving body captured by the image capturing device; recognition means for recognizing an object outside the moving body on the basis of the image; identification means for identifying a risk target having a risk of coming into proximity with the moving body among the recognized objects; and notification control means for giving a user a voice notification using a natural language including an expression representing a recognized object. The notification control means gives the user either a direct notification for notifying the user of the presence of a risk posed by the risk target or an indirect notification for notifying the user of information suggesting the risk target, on the basis of the risk target and a traveling state of the moving body.

## Description

### TECHNICAL FIELD

The present invention relates to a control apparatus and a control method.

### BACKGROUND ART

Conventionally, there has been known a technique for controlling a brake by giving the driver a warning when it is predicted that a traveling vehicle may collide with a passerby such as a person (PTL1).

### CITATION LIST

### PATENT LITERATURE

PTL1: International Publication No. 2022/239327

### SUMMARY OF INVENTION

### TECHNICAL PROBLEM

Incidentally, when a warning sound is output when an external passerby is approaching the vicinity of a traveling vehicle, the driver of the vehicle can grasp a target that is highly likely to collide and an operation to avoid the collision (such as deceleration) without additional information. On the other hand, when a passerby is not approaching the vicinity of the vehicle, even if a warning sound is output, there is a case where the driver cannot instantaneously grasp what the warning is for. Therefore, it is useful to display visual information (information for calling attention) on the windshield to notify of a warning target. However, increased attention calling can cause discomfort or confusion as to what to do.

The present invention has been made in view of the above problem, and an object thereof is to implement a technique capable of providing an appropriate notification according to a situation.

### SOLUTION TO PROBLEM

According to the present invention,
a control apparatus disposed in a moving body including an image capturing device is provided, the control apparatus comprising:
image acquisition means for acquiring an image of an outside of the moving body captured by the image capturing device;
recognition means for recognizing an object outside the moving body on the basis of the image;
identification means for identifying a risk target having a risk of coming into proximity with the moving body among the recognized objects; and
notification control means for giving a user a voice notification using a natural language including an expression representing a recognized object, characterized in that
the notification control means gives the user either a direct notification for notifying the user of the presence of a risk posed by the risk target or an indirect notification for notifying the user of information suggesting the risk target, on the basis of the risk target and a traveling state of the moving body.

### ADVANTAGEOUS EFFECT OF INVENTION

According to the present invention, it is possible to provide an appropriate notification according to a situation.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating a configuration example of a vehicle according to an embodiment.
FIG. 2 is a block diagram illustrating a functional configuration example of a control apparatus according to the embodiment.
FIG. 3 is a diagram for describing an aspect of notification output by a notification control unit according to the embodiment.
FIG. 4A is a diagram for describing a relationship between a state in relation to a risk target and a notification mode according to the embodiment.
FIG. 4B is a diagram for describing a relationship between a state in relation to a risk target and a notification mode according to the embodiment.
FIG. 5 is a diagram for describing an example of a case where no risk target is identified according to the embodiment.
FIG. 6 is a diagram for describing an example of a case where a risk target is identified according to the embodiment.
FIG. 7 is a diagram for describing another example of a case where a risk target is identified according to the embodiment.
FIG. 8 is a flowchart illustrating a series of operations of notification processing according to the embodiment.
FIG. 9 is a flowchart illustrating a series of operations of notification control processing according to the embodiment.
FIG. 10 is a diagram for describing an example of notification according to whether or not a risk target according to the embodiment is visually recognized.
FIG. 11 is a block diagram illustrating a configuration example of a notification control unit 205 according to the embodiment.
FIG. 12 is a flowchart illustrating a series of operations of follow-up processing according to the embodiment.
FIG. 13 is a flowchart illustrating another series of operations of the follow-up processing according to the embodiment.

### DESCRIPTION OF EMBODIMENTS

Hereinafter, embodiments will be described in detail with reference to the attached drawings. Note that the following embodiments are not intended to limit the scope of the claimed invention, and limitation is not made an invention that requires all combinations of features described in the embodiments. Two or more of the multiple features described in the embodiments may be combined as appropriate. Furthermore, the same reference numerals are given to the same or similar configurations, and redundant description thereof is omitted.

### <Vehicle configuration example>

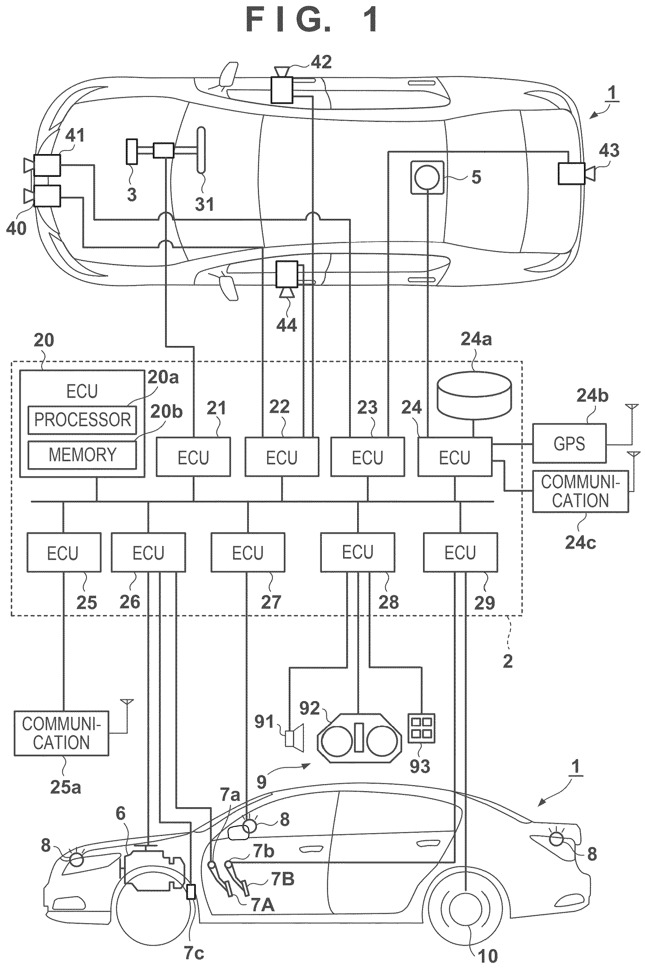

FIG. 1 is a block diagram of a vehicle 1 according to an embodiment of the present invention. In FIG. 1, an outline of the vehicle 1 is illustrated in a plan view and in a side view. The vehicle 1 is, for example, a four-wheeled passenger vehicle, but may be a two-wheeled vehicle or any other type of vehicle. The vehicle 1 is an example of a moving body of the present embodiment, and the moving body is not limited to a vehicle, and may include another moving body such as a remotely operated robot.

The vehicle 1 includes a vehicle control apparatus 2 (hereinafter simply referred to as a control apparatus 2) that controls the vehicle 1. The control apparatus 2 includes a plurality of electronic control units (ECUs) 20 to 29 communicably connected by an in-vehicle network. Each ECU includes a processor such as a central processing unit (CPU) or a graphics processing unit (GPU), a memory such as a semiconductor memory, an interface with an external device, and the like. The memory stores programs to be executed by the processor, data for use in processing by the processor, and the like. Each of the ECUs may include a plurality of processors, memories, interfaces, or the like. For example, the ECU 20 includes a processor 20a and a memory 20b. Processing by the ECU 20 is performed by the processor 20a executing instructions included in a program stored in the memory 20b. Instead of this, the ECU 20 may include an integrated circuit such as an application specific integrated circuit (ASIC) dedicated to performing processing by the ECU 20. A similar configuration applies to the other ECUs.

Hereinafter, functions and the like to be performed by each of the ECUs 20 to 29 will be described. Note that the number of ECUs and functions to be performed can be designed as appropriate, and can be subdivided or integrated more than in the present embodiment. For example, one ECU (for example, the ECU 22) may also include a function of another ECU.

The ECU 20 conducts control related to manual traveling and automated traveling of the vehicle 1. In automated traveling, at least one of steering of the vehicle 1 and acceleration/deceleration is controlled in an automated manner. Note that the automated traveling by the ECU 20 may include automated traveling that does not necessitate a driver's traveling operation (can also be referred to as automated driving) and automated traveling for assisting the driver's driving operation (can also be referred to as driving assistance). In place of the driver's driving, the control of traveling by the ECU 20 may include, for example, control for automatically stopping or steering the vehicle in order to avoid a collision.

The ECU 21 controls an electric power steering device 3. The electric power steering device 3 includes a mechanism that steers front wheels in accordance with a driver's driving operation (steering operation) on a steering wheel 31. In addition, the electric power steering device 3 includes a motor that exerts a driving force for assisting the steering operation or automatically steering the front wheels, a sensor that detects a steering angle, and the like. When the driving state of the vehicle 1 is automated driving, the ECU 21 automatically controls the electric power steering device 3 in response to an instruction from the ECU 20, and controls the advancing direction of the vehicle 1.

The ECUs 22 and 23 control detection units for detecting surrounding situations of the vehicle, and perform information processing on detection results. The vehicle 1 includes one standard camera 40 and four fisheye cameras 41 to 44, each serving as the detection unit for detecting a surrounding situation of the vehicle. The standard camera 40 and the fisheye cameras 42 and 44 are connected to the ECU 22. The fisheye cameras 41 and 43 are connected to the ECU 23. The ECUs 22 and 23 analyze the images captured by the standard camera 40 and the fisheye cameras 41 to 44, thereby being able to recognize the type and movement trajectory of an object in the image, and the lane area and the lane division line (white line or the like) on the road. Note that the type, number, and attachment position of the camera included in the vehicle 1 are not limited to the example in the present embodiment, and may have any other configuration.

The standard camera 40 is attached at the center in a front part of the vehicle 1, and captures an image of a surrounding situation ahead of the vehicle 1. The fisheye camera 41 is attached at the center in the front part of the vehicle 1, and captures an image of a surrounding situation ahead of the vehicle 1. In FIG. 1, the standard camera 40 and the fisheye camera 41 are illustrated to be horizontally aligned with each other. However, the arrangements of the standard camera 40 and the fisheye camera 41 are not limited to this, and they may be vertically aligned with each other, for example. In addition, at least one of the standard camera 40 and the fisheye camera 41 may be attached to a front portion of the roof (for example, on the vehicle interior side of the windshield) of the vehicle 1. The fisheye camera 42 is attached at the center in a right lateral part of the vehicle 1, and captures an image of a surrounding situation on the right side of the vehicle 1. The fisheye camera 43 is attached at the center in a rear part of the vehicle 1, and captures an image of a surrounding situation on the rear side of the vehicle 1. The fisheye camera 44 is attached at the center in a left lateral part of the vehicle 1, and captures an image of a surrounding situation on the left side of the vehicle 1. The vehicle 1 may include a light detection and ranging (LiDAR) or a millimeter wave radar as a detection unit for detecting an object around the vehicle 1 and measuring a distance to the object.

The ECU 22 controls the standard camera 40 and the fisheye cameras 42 and 44, and performs information processing on detection results. The ECU 23 controls the fisheye cameras 41 and 43, and performs information processing on detection results. The detection units for detecting the surrounding situations of the vehicle are divided into two systems, so that the reliability of the detection results can be improved. In addition, the ECU 22 is capable of detecting the direction of the driver's head and the driver's line of sight using an image of the driver captured with a fisheye camera (not illustrated) installed in the vehicle interior.

The ECU 24 controls a gyro sensor 5, a GPS sensor 24b, and a communication device 24c, and performs information processing on a detection result or a communication result. The gyro sensor 5 detects a rotational movement of the vehicle 1. A course of the vehicle 1 can be determined on the basis of a detection result of the gyro sensor 5, a wheel speed, and the like. The GPS sensor 24b detects a current position of the vehicle 1. The communication device 24c performs wireless communication with a server that provides map information and traffic information, and acquires these pieces of information. The ECU 24 can access a map information database 24a constructed in a memory, and the ECU 24 searches for a route from a current location to a destination and the like. The ECU 24, the map database 24a, and the GPS sensor 24b constitute a so-called navigation device.

The ECU 25 includes a communication device 25a for inter-vehicle communication. The communication device 25a performs, for example, wireless communication with another vehicle in the surroundings to exchange information between the vehicles.

The ECU 26 controls a power plant 6. The power plant 6 is a mechanism that outputs a driving force for rotating driving wheels of the vehicle 1, and includes, for example, an engine and a transmission. For example, the ECU 26 controls the output of the engine in response to a driver's driving operation (an accelerator operation or an acceleration operation) that has been detected by an operation detection sensor 7a, which is provided on an accelerator pedal 7A, or switches a gear ratio of the transmission on the basis of information such as a vehicle speed that has been detected by a vehicle speed sensor 7c.

The ECU 27 controls a lighting device (a headlight, a taillight, and the like) including direction indicators 8 (blinkers). In the example of FIG. 1, the direction indicators 8 are provided at the front portion, the door mirror, and the rear portion of the vehicle 1.

The ECU 28 controls an input/output device 9. The input/output device 9 outputs information to the driver, and receives information input from the driver. A voice output device 91 notifies the driver of information by, for example, sounds including an utterance. The notification content is generated, for example, by the ECU 22 performing notification control processing to be described later, and is output by being transmitted to the ECU 28. A display device 92 notifies the driver of information by displaying an image. The display device 92 is disposed, for example, in front of a driver's seat, and constitutes an instrument panel or the like. Note that although voice and display have been given as examples here, information may also be notified by vibration or light. In addition, information may be notified by a combination of two or more of voice, display, vibration, and light. An input device 93 is a group of switches that are disposed at positions for the driver to be able to operate and give an instruction to the vehicle 1, but may also include a voice input device.

The ECU 29 controls a brake device 10 and a parking brake (not illustrated). The brake device 10 is, for example, a disc brake device, and is provided on each wheel of the vehicle 1 to apply resistance against rotation of the wheels to decelerate or stop the vehicle 1. The ECU 29 controls the activation of the brake device 10 in response to a driver's driving operation (a braking operation) that is detected by an operation detection sensor 7b provided on a brake pedal 7B, for example. When the driving state of the vehicle 1 is automated driving, the ECU 29 automatically controls the brake device 10 in response to an instruction from the ECU 20, and controls the vehicle 1 to be decelerated and stopped. The brake device 10 and the parking brake can also be activated to maintain the stopped state of the vehicle 1. In addition, in a case where the transmission of the power plant 6 includes a parking lock mechanism, it is also possible to activate the parking lock mechanism to maintain the stopped state of the vehicle 1.

### <Functional configuration example implemented in ECU 22>

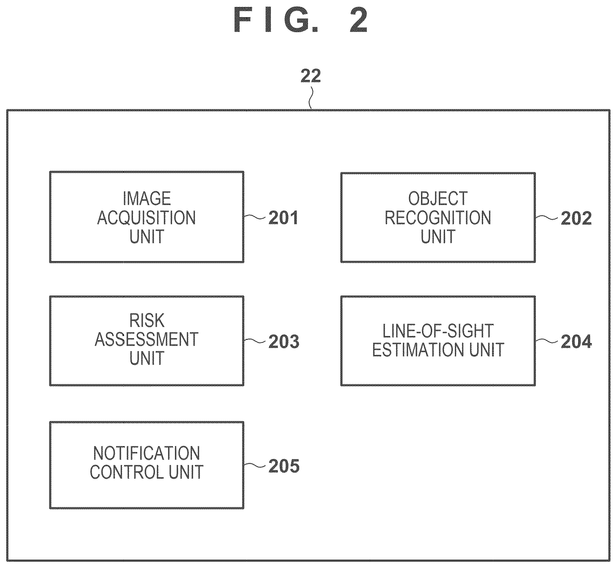

Next, a functional configuration example implemented in the ECU 22 will be described with reference to FIG. 2. Note that the functional configuration example illustrated in FIG. 2 illustrates an example of a functional configuration implemented by the ECU 22 executing a program stored in an internal memory. In addition, the functional configuration example illustrated in FIG. 2 focuses on a configuration related to the notification processing to be described later. Therefore, the functions implemented in the ECU 22 are not limited to those illustrated in FIG. 2, and may include any other function.

An image acquisition unit 201 acquires an image in which the outside of the vehicle 1 is captured by the standard camera 40. Note that images captured by the standard camera 40 and the fisheye cameras 42 and 44 may be acquired.

An object recognition unit 202 recognizes an object outside the vehicle 1 on the basis of the image acquired by the image acquisition unit 201. The object includes, for example, a passerby (a pedestrian or a person riding a bicycle) passing through a road. For example, the object recognition unit 202 may recognize the type of an object in the image, the lane area and the lane division line (white line or the like) on the road by inputting the image to, for example, one or more neural networks.

A risk assessment unit 203 identifies, as a risk target, an object having a risk of coming into proximity with the vehicle 1 among the recognized objects (for example, a passerby). First, the risk assessment unit 203 estimates the trajectory on which the passerby moves on the basis of the image acquired by the image acquisition unit 201. The estimation of the trajectory on which the passerby moves in the image may be estimated, for example, by inputting the image to one or more neural networks. A known technique can be used as a method of estimating the trajectory on which the passerby moves in the image on the basis of the image. The trajectory on which the passerby moves may be estimated on the basis of, for example, the direction of the body and the direction of the face of the passerby estimated from the image.

The risk assessment unit 203 calculates the length of the predicted time until the vehicle 1 collides with the passerby and the distance of the passerby from the trajectory on which the vehicle 1 travels on the basis of the estimated trajectory of the passerby and the movement trajectory of the vehicle (acquired from, for example, the ECU 20). Then, the risk (for example, a risk of collision) of the passerby and the vehicle 1 coming into proximity is calculated on the basis of the calculated length of time and the distance between the trajectory and the passerby. The proximity risk may be, for example, a numerical value between 0 and 1, or may be a stepwise expression divided into several stages (zero, low, medium, high, and the like). For example, the risk assessment unit 203 may identify an object (for example, a pedestrian) whose proximity risk is larger than a predetermined risk threshold as a risk target. In addition, when no risk target is identified, the risk assessment unit 203 may determine that whether there is a risk target is unknown.

Note, however, that the method of identifying the risk target is not limited to this method. Not limited to the case where the proximity risk is higher than the risk threshold, the risk assessment unit 203 may identify, for example, an object existing and recognized in an image as a risk target. In addition, when it is determined that there is no object such as a pedestrian in the image, and when a scene where there is an object such as a parked vehicle that creates a blind spot in the image (that is, a predetermined scene in which a risk due to jumping out or the like may statistically exist) is further recognized, it may be determined that whether there is a risk target is unknown.

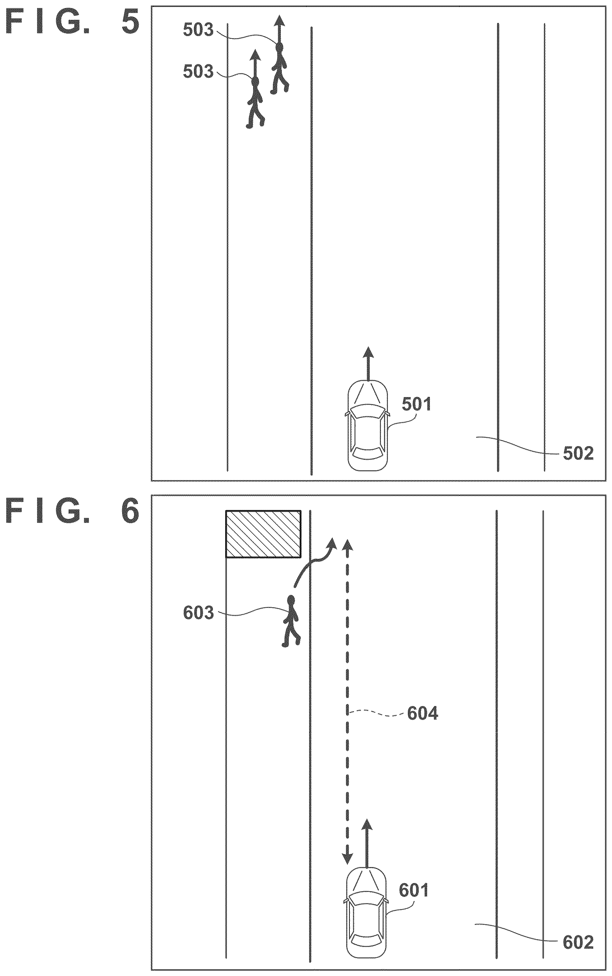

For example, FIG. 5 schematically illustrates a state in which a passerby 503 is walking along a sidewalk when a vehicle 501 travels on a road 502. The passerby 503 is walking at a position far from the vehicle 1. In this case, for example, the risk assessment unit 203 may determine that the risk of the vehicle 1 and the passerby 503 coming into proximity is equal to or less than a predetermined threshold, and determine that whether there is a risk target is unknown.

In addition, FIG. 6 schematically illustrates a state in which a passerby 603 is walking on a sidewalk when a vehicle 601 travels on a road 602, and there is a possibility that a predicted trajectory of the pedestrian may come into proximity with a traveling trajectory of the vehicle due to an obstacle. The passerby 603 is walking at a position far from the vehicle 1 (distance 604 is large). In this case, for example, the risk assessment unit 203 may determine that the risk of the vehicle 601 and the passerby 603 coming into proximity is greater than a predetermined threshold, and may determine that the passerby 603 is a risk target.

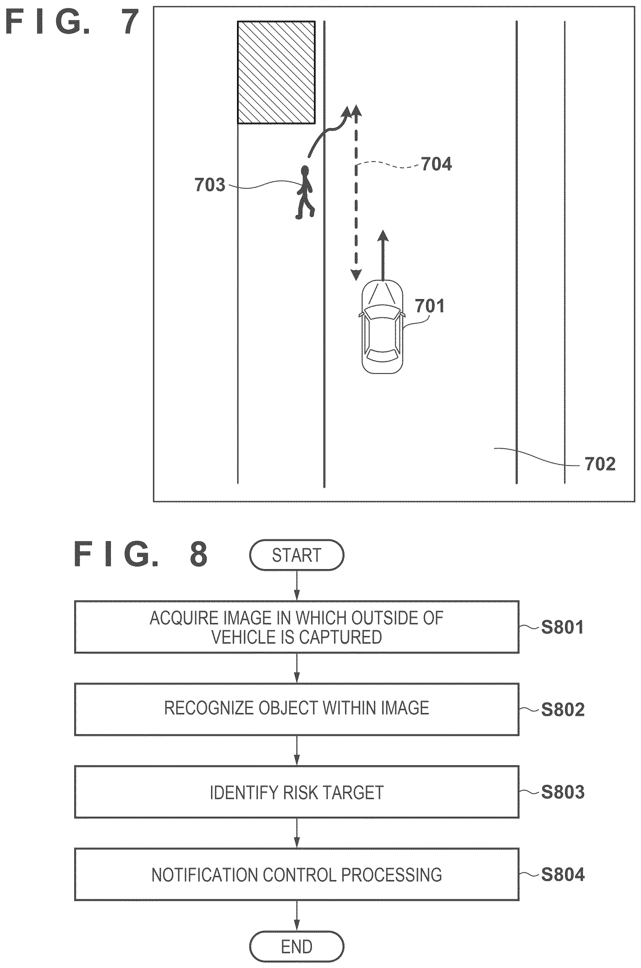

FIG. 7 schematically illustrates a state in which a passerby 703 is walking on a sidewalk when a vehicle 701 travels on a road 702, and there is a possibility that a predicted trajectory of the pedestrian may come into proximity with a traveling trajectory of the vehicle due to an obstacle. In the example illustrated in FIG. 7, the passerby 703 is walking at a position (distance 704 is small) close to the vehicle 701. Therefore, the risk of the vehicle 701 and the passerby 703 coming into proximity is higher than the risk of the vehicle 601 and the passerby 603 coming into proximity. Accordingly, for example, the risk assessment unit 203 determines that the risk of the vehicle 701 and the passerby 703 coming into proximity is greater than a predetermined threshold, and determines that the passerby 703 is a risk target.

A line-of-sight estimation unit 204 estimates whether the driver visually recognizes a passerby using an image (referred to as a rear captured image for convenience) captured by a camera in the vehicle and including the driver in the image. For example, the line-of-sight estimation unit 204 estimates the direction of the face and the direction of the line of sight of the driver using the rear captured image. The direction of the face and the direction of the line of sight of the driver may be estimated by inputting the rear captured image to one or more neural networks, for example. The line-of-sight estimation unit 204 estimates whether the driver visually recognizes the passerby on the basis of, for example, the trajectory of the passerby (the position viewed from the vehicle 1) obtained by the risk assessment unit 203 and the direction of the face and direction of the line of sight of the driver.

A notification control unit 205 gives the driver a voice notification using a natural language (including an expression representing a recognized object) on the basis of the identification result of the risk target and the degree of proximity between the risk target and the vehicle 1. The notification control unit 205 according to the present embodiment outputs either a direct notification or an indirect notification as a voice notification using a natural language to the driver.

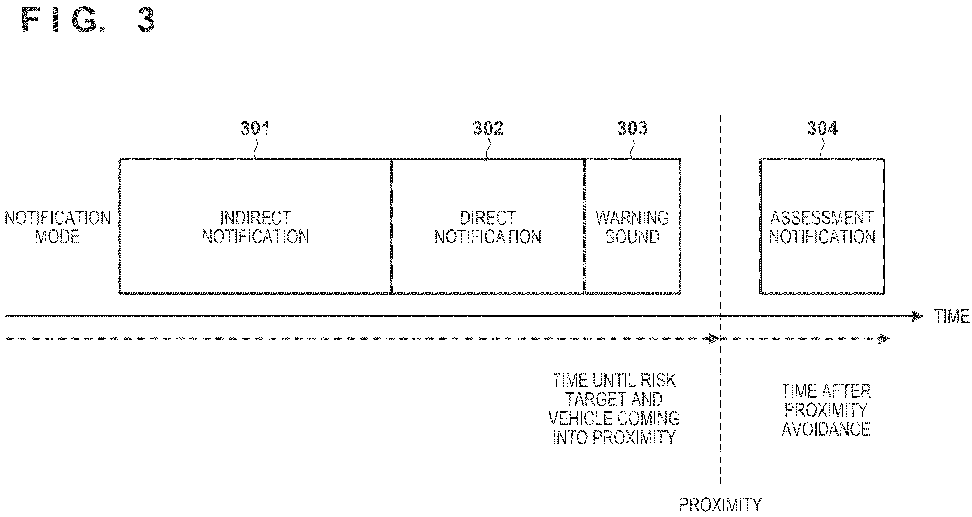

FIG. 3 illustrates an aspect of notification output by the notification control unit 205 according to the present embodiment. The notification control unit 205 outputs any one of an indirect notification 301, a direct notification 302, and a warning sound 303 according to, for example, the degree of proximity (for example, the time until coming into a predicted degree of proximity or the distance from the vehicle 1 to the position of the predicted degree of proximity) between the vehicle and the risk target (for example, a pedestrian). The example illustrated in FIG. 3 indicates that the warning sound 303, the direct notification 302, and the indirect notification 301 are output in ascending order of time until the risk target and the vehicle come into proximity. The width of the time satisfying the condition for outputting the indirect notification 301 can be wider than the width of the time satisfying the condition for outputting the direct notification 302. By outputting the indirect notification for a longer time than the direct notification, it is possible to suggest the presence of an object to be noted to the driver from a relatively early stage.

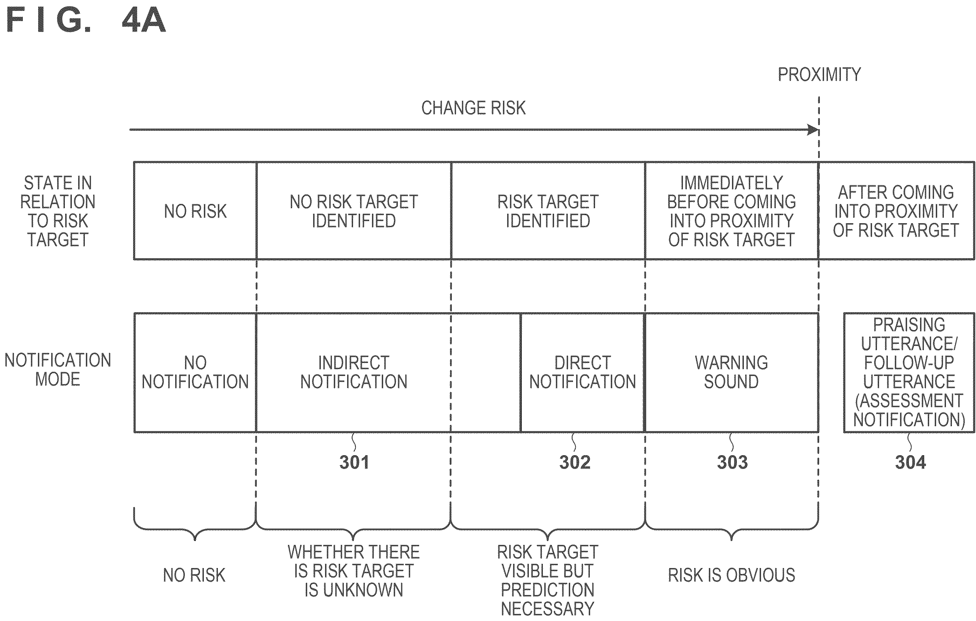

FIG. 4A illustrates a relationship between a state in relation to a risk target and a notification mode. For example, the warning sound 303 is output in a state immediately before coming into proximity with the risk target. In addition, when a risk target has been identified, the direct notification 302 is output (under certain conditions such as the time until coming into proximity). For example, in the situation of the risk target illustrated in FIG. 7, the direct notification 302 is output. Furthermore, the indirect notification 301 is given when no risk target is identified (for example, the situation illustrated in FIG. 5), and under certain conditions (for example, the situation illustrated in FIG. 6 in which the time until coming into proximity is long, or the like) when a risk target is identified. Note that the example illustrated in FIG. 4A illustrates the example in which the indirect notification 301 is given when no risk target is identified (when the risk target is unknown). However, when the risk target is unknown, it is possible to omit all of the indirect notification 301, the direct notification 302, and the warning sound 303. That is, the indirect notification 301 may be given only under certain conditions when a risk target is identified (for example, when the time until coming into proximity is longer than a threshold or the distance to the risk target is longer than a threshold). The notification control unit 205 does not output a notification when determining that there is no risk, such as when there is no object in the image.

Examples of the notification mode will be specifically described. For example, when (a risk target is identified, and) the time until the identified risk target and the vehicle 1 come into proximity is equal to or shorter than a first time (for example, eight seconds), the notification control unit 205 gives the driver the direct notification 302. The direct notification includes, for example, an expression representing an object and an expression causing the driver to start risk avoidance. For example, the direct notification includes an expression such as "Pedestrian on the left front. He/She may come near. Let's go slowly.". That is, the direct notification may include an expression representing a position of a risk target (for example, the left front), an expression representing a type of an object that is a risk target (for example, a pedestrian), and an expression causing the driver to start risk avoidance (for example, "Let's go slowly"). The expression causing the driver to start risk avoidance may include an expression of how the driver should operate the vehicle (for example, "Decelerate", or the like). The direct notification may include at least one of an expression representing a predicted action of an object (for example, "He/She may come near") and an expression representing a reason for starting risk avoidance (for example, "A pedestrian is approaching from the left front"). As described above, although the risk content cannot be intuitively understood by simply outputting a warning sound at a timing when there is a certain amount of time until coming into proximity, the driver can specifically grasp a target to be noted and take necessary action with a direct notification.

Note that in the above example, the direct notification has been described as including an expression representing an object and an expression causing the driver to start risk avoidance as an example. However, the direct notification may include various expressions as long as the user is notified of the presence of a risk caused by a specific object. For example, the direct notification may include an expression indicating the presence of a risk by a risk target (specific object), such as "A pedestrian is crossing". For example, the direct notification may include an expression representing the position of the risk target and an expression indicating the presence of a risk by the risk target, such as "There is a pedestrian approaching from the left front". The direct notification may include an expression indicating the presence of a risk by the risk target and an expression for starting risk avoidance, such as "There is a pedestrian crossing. Let's go slowly.".

The notification control unit 205 outputs the warning sound 303 when the time until the identified risk target and the vehicle 1 come into proximity is equal to or shorter than a second time shorter than the first time (that is, a state immediately before coming into proximity with the risk target). The warning sound 303 need not include natural language, for example. That is, immediately before (for example, two seconds before) a pedestrian who is a risk target and the vehicle come into proximity, by hearing the output warning sound and looking in the traveling direction, the driver can grasp that the vehicle may collide with the pedestrian and should decelerate or steer the vehicle (that is, the risk is obvious). Accordingly, if the warning sound 303 is output, the driver can take an action of risk avoidance.

When (a risk target is identified, and) the time until the identified risk target and the vehicle come into proximity is longer than a predetermined first time, the notification control unit 205 gives the driver the indirect notification 301. Alternatively, the notification control unit 205 may give the driver the indirect notification 301 when the time until the identified risk target and the vehicle come into proximity is longer than a predetermined first distance. Then, the notification control unit 205 may give the direct notification when the distance until the identified risk target and the vehicle come into proximity is equal to or shorter than the first distance. Additionally, the notification control unit 205 gives the driver the indirect notification 301 when no risk target is identified in the risk assessment result of the risk assessment unit 203. Such a risk state for outputting the indirect notification is, for example, the state described above in FIGS. 5 and 6.

For example, the indirect notification includes an expression representing an object but does not include an expression causing the driver to start risk avoidance. The indirect notification includes, for example, an expression such as "There are many delivery bikes recently.". For example, the indirect notification includes an expression representing that an object exists. The indirect notification may be configured not to include an expression representing the position of an object as in the direct notification and simply indicate only the presence of the object. The indirect notification may be configured not to include an expression specifying an individual object as in the direct notification and include a general expression not specifying an individual object. The indirect notification does not include an expression representing the position of the object or an expression causing the driver to start risk avoidance. Therefore, the indirect notification only notifies the driver of the presence of the object and does not cause the driver to perform an excessive risk avoidance operation. In addition, when the warning sound is simply output at a timing when the time until coming into proximity is long, the driver cannot intuitively understand the risk content, and may feel discomfort about the frequently output warning sound. On the other hand, by using the above-described indirect notification, the driver can continue driving while grasping the potential risk.

Note that in the above example, as an example, the indirect notification has been described as including an expression representing an object but not including an expression causing the driver to start risk avoidance. The indirect notification may be an expression including information suggesting a risk target without specifying a specific risk target (individual), such as "There are many delivery bikes recently " or "There are many children commuting to school.". The information suggesting a risk target may include, for example, at least one of characteristics of a risk target (object) not individually specified, information by which a risk target can be identified, and information related to the risk target other than the risk content. The information related to the risk target other than the risk content may be information associated with current news or a trending topic. The ECU 22 can acquire and use information from the news and social media disclosed on the Internet, for example, via the communication device 24c. For example, the indirect notification can be a notification that includes information associated with current news expression and does not specify an individual child, such as "Recently, there seems to be an increase in children darting out onto the road.".

Furthermore, a warning sound or a direct notification can cause the driver to feel negative. Therefore, as illustrated in FIGS. 3 and 4A, the notification control unit 205 may include an expression indicating empathy to the user or an expression accepting the user in an assessment notification 304 after giving the driver the direct notification or the indirect notification. The expression indicating empathy to the user may include, for example, an expression of "That kind of behavior is problematic, isn't it?". After giving the direct notification or the indirect notification, the notification control unit 205 gives a notification including an expression indicating empathy to the user or an expression accepting the user, so that the acceptability of the user to the notification can be enhanced. The expression for enhancing the acceptability of the user may include an expression of praising the user and an expression of giving advice to the user. The notification control unit 205 may give the assessment notification 304 including an expression of assessing the user's action according to the user operation (such as deceleration or steering) received after giving the driver the direct notification or the indirect notification. At this time, the notification control unit 205 may include, in the assessment notification 304, an expression praising the user or an expression giving advice to the user according to the time until the user operation is received after the direct notification or the indirect notification is given. For example, when a user operation is received within a predetermined time or shorter after giving a direct notification or an indirect notification, an expression praising the driver may be included in the notification, and otherwise, an expression giving advice to the user may be included in the notification.

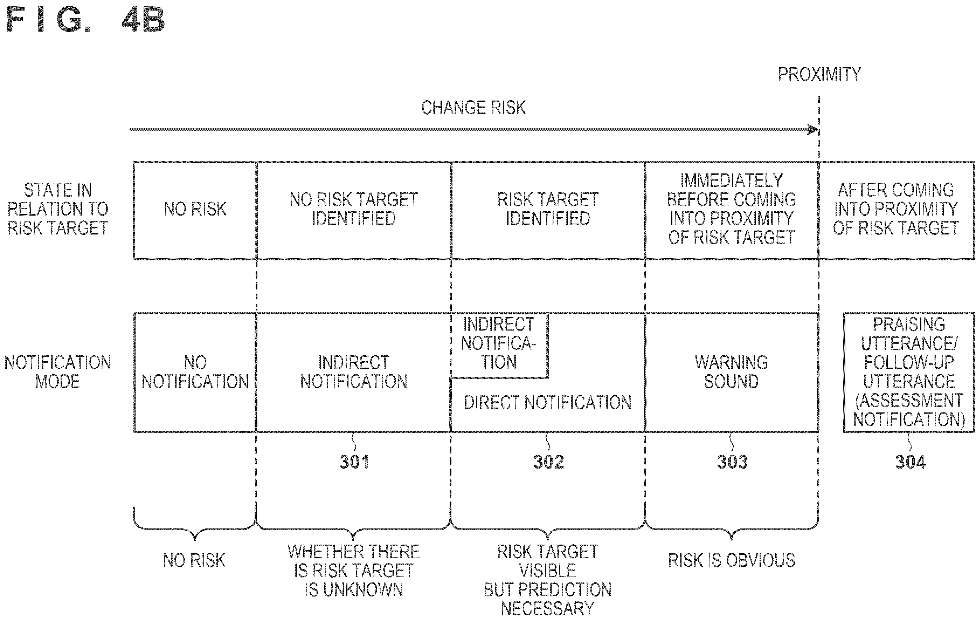

Another example of the relationship between a state in relation to a risk target and a notification mode will be described with reference to FIG. 4B. For example, the warning sound 303 is output in a state immediately before coming into proximity with the risk target. In addition, when a risk target has been identified, the direct notification 302 is output (under certain conditions such as the time until coming into proximity and a visually recognized state of the risk target). For example, when the time until coming into proximity is equal to or less than a threshold (or the distance to the risk target is equal to or less than a threshold) and the risk target is not visually recognized, the direct notification 302 is output. The indirect notification 301 is given when no risk target is identified and under certain conditions when a risk target is identified (under certain conditions such as the time until coming into proximity and the visually recognized state of the risk target). For example, the indirect notification 301 may be given when no risk target is identified and when the time until coming into proximity is longer than a threshold (or the distance to the risk target is longer than a threshold) and the risk target is visually recognized. On the other hand, it is possible to give the indirect notification 301 only when the time until coming into proximity is longer than a threshold (or the distance to the risk target is longer than a threshold) and the risk target is visually recognized. Then, when the risk target is unknown, it is possible to omit all of the indirect notification 301, the direct notification 302, and the warning sound 303. The assessment notification 304 illustrated in FIG. 4B is the same as the assessment notification 304 described with reference to FIG. 4A.

As an example, the notification control unit 205 generates an utterance sentence of direct notification by inputting the type and position of the recognized risk target, the relative distance from the vehicle 1, and the like to a trained utterance generation algorithm. For example, the utterance generation algorithm is trained using, as training data, direct notification data which consists of sets of previously collected various risk targets, relative distances, and the like, together with utterance examples of direct notification. Furthermore, as an example, the notification control unit 205 inputs the presence or absence of a risk target, the type and position of the risk target, the relative distance from the vehicle 1, and the like to a trained utterance generation algorithm, thereby generating an utterance sentence of an indirect notification. For example, the utterance generation algorithm is trained using, as training data, indirect notification data which consists of sets of previously collected various risk targets, relative distances, the presence or absence of a risk target, and the like, together with utterance examples of indirect notification. Note that the direct notification or the indirect notification may be output by one utterance generation algorithm.

Similarly, the notification control unit 205 generates a notification including an expression of praising the user or an expression of giving advice to the user by using an utterance generative model trained using the praising utterance data or the advice utterance data.

### <Example of notification generation using large language model (LLM)>

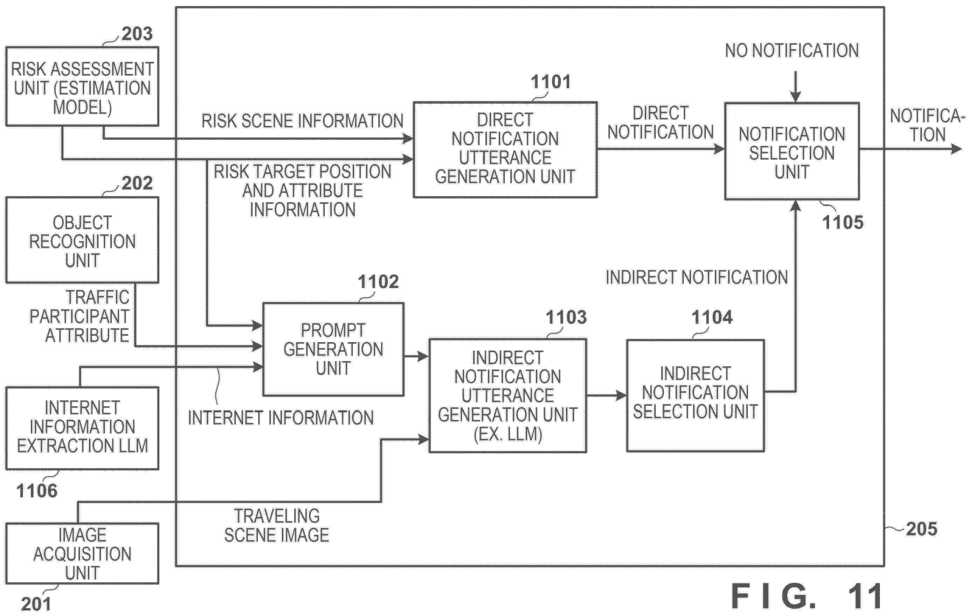

Not limited to the above example, a specific example in a case where the notification control unit 205 generates an utterance using a large language model will be described with reference to FIG. 11. Here, an example of generating the indirect notification using a large language model (LLM) will be described. FIG. 11 illustrates a configuration example in a case where a large language model is used to generate the utterance content of the indirect notification in the notification control unit 205. Note that while the example described below uses the large language model to generate the utterance content of the indirect notification, the large language model may be used to generate the utterance content of the direct notification, or to generate both the indirect notification and the direct notification.

A direct notification utterance generation unit 1101 generates the utterance content of the direct notification. For example, the direct notification utterance generation unit 1101 generates the utterance content related to the direct notification, for example, using risk scene information generated by the risk assessment unit 203 as an input. Risk scene information indicates the risk content assumed from a scene. For example, risk scene information includes information indicating a risk scene in which a bicycle that is a risk target changes lanes to avoid a parked vehicle and collides with the host vehicle. The direct notification utterance generation unit 1101 generates, for example, an utterance "The left bicycle may jolt out toward you." as the utterance content of the direct notification.

An indirect notification utterance generation unit 1103 generates the utterance content of the indirect notification. The indirect notification utterance generation unit 1103 inputs, for example, a prompt generated by a prompt generation unit 1102 and a traveling scene image to the large language model, and generates the utterance content of the indirect notification. A traveling scene image is an image acquired by the image acquisition unit 201. The prompt generation unit 1102 generates a prompt for LLM by inputting, for example, an attribute of a traffic participant (recognized in the image) output from the object recognition unit 202, information of the position and attribute of the risk target output from the risk assessment unit 203, and Internet information. The Internet information may include, for example, at least one of current news on the Internet, trending information, and trending words. The prompt includes an instruction (that is, a prompt) for causing the LLM (that is, the indirect notification utterance generation unit 1103) to generate an utterance expressing the risk target in consideration of, for example, current news, season, trend, trending words, or the like. The prompt generation unit 1102 generates, for example, a prompt of the content "Generate a conversation about a bicycle ridden by a person in red clothes in the image in consideration of the winter season and the latest news.". The prompt generation unit 1102 may generate a prompt including recent news and trending words by inputting Internet information. With the prompt including recent news and trending words, it is possible to cause the large language model to generate utterance content more closely related to current news and trending words.

In the present embodiment, the prompt generation unit 1102 inputs information regarding the position and attribute of the risk target output from the risk assessment unit 203 and generates a prompt for the LLM. The risk assessment unit 203 is implemented as a risk estimation model, and may be, for example, implemented as a model such as a model-based or deep neural network as a trained risk estimation model separate from the LLM of the indirect notification utterance generation unit 1103. That is, the risk assessment unit 203 serving as a risk estimation model identifies a risk target by estimation, and then the prompt generation unit 1102 generates a prompt on the basis of information of the identified risk target. In this way, the generated prompt is refined with respect to the risk target, and the natural language sentence of the indirect notification generated in the LLM can be a more natural sentence and an appropriate sentence. As a result, it is possible to suppress generation of a sentence that requires filtering of the indirect notification generated by the LLM (by the indirect notification selection unit 1104), and make the generated indirect notification more appropriate.

Furthermore, in the present embodiment, an Internet information extraction LLM1006 inputs at least one of current news on the Internet, trending information, and trending words extracted and generated via the Internet to the prompt generation unit 1102 as Internet information. The Internet information extraction LLM1006 may be an LLM separate from the LLM used by the indirect notification utterance generation unit 1103. By acquiring the Internet information by using an LLM different from the LLM used by the indirect notification utterance generation unit 1103, the information input to the prompt generation unit 1102 can be further refined, and the ratio of input of noise information or ambiguous information to the prompt generation unit 1102 can be reduced. Since the prompt suitable for generation of the indirect notification is generated by the prompt generation unit 1102, the natural language sentence of the indirect notification generated by the LLM of the indirect notification utterance generation unit 1103 can be a more natural sentence or an appropriate sentence. As a result, it is possible to suppress generation of a sentence that requires filtering of the indirect notification generated by the LLM (by the indirect notification selection unit 1104), and make the generated indirect notification more appropriate. For example, predetermined prompts such as "Tell me the recent news.", "Tell me the recent trend.", and "Tell me the recently trending words." may be input to the Internet information extraction LLM1006. Alternatively, a generative model that generates a prompt for input to the Internet information extraction LLM1006 may be separately used.

Note that the configuration for inputting the Internet information from the Internet information extraction LLM1006 to the prompt generation unit 1102 is not limited to this example. For example, a module for selecting information for further filtering the Internet information from the Internet information extraction LLM1006 may be interposed. The filtering of the Internet information can be performed using, for example, a training model in which terms, expressions, and sentences to be filtered are trained in advance.

The prompt generation unit 1102 may be configured by a trained model trained using training data having the input data described above and a prompt to be generated as one set. When the indirect notification utterance generation unit 1103 generates utterance content, the generated utterance content is input to the indirect notification selection unit 1104. The indirect notification utterance generation unit 1103 can generate a plurality of utterance content items for one set of a prompt and a traveling scene image.

An indirect notification selection unit 1104 filters only the utterance content that satisfies a predetermined condition among (a plurality of) utterance content items generated by the indirect notification utterance generation unit 1103, and outputs, for example, one utterance content item randomly selected from the filtered utterance content items as an indirect notification. For example, the indirect notification selection unit 1104 determines utterance content equivalent to or highly similar to the direct notification (including an expression causing the driver to start risk avoidance) as utterance content that does not satisfy a predetermined condition, and excludes the utterance content from the indirect notification. For example, the indirect notification selection unit 1104 also determines that utterance content including a predetermined negative expression associated with an accident is utterance content that does not satisfy a predetermined condition, and excludes the utterance content from the indirect notification. The indirect notification selection unit 1104 also determines utterance content that has already been used for notification within a predetermined time or utterance content that is a predetermined unnatural expression as utterance content that does not satisfy a predetermined condition, and excludes the utterance content from the indirect notification. That is, the indirect notification selection unit 1104 selects and outputs one utterance content item from among the filtered utterance content items that do not include these utterance content items. The indirect notification output from the indirect notification selection unit 1104 includes, for example, utterance content such as "This is a green bicycle in trend, but it looks cold in winter.".

Note that the example illustrated in FIG. 11 illustrates an example in which Internet information is input to the prompt generation unit 1102. However, the Internet information may be input to the indirect notification utterance generation unit 1103 instead of being input to the prompt generation unit 1102. The large language model is often trained using a large amount of information from information on the Internet, but there may be a case where the latest current news, trend, and trending words are not included in the data at the time of training. Therefore, by inputting Internet information (in addition to the prompt) to the large language model, it is possible to easily generate utterance content in which the latest current news, the trend, and the like are associated with each other.

### <Series of operations of notification processing in vehicle>

Next, a series of operations of notification processing in the vehicle will be described with reference to FIG. 8. This processing is achieved, for example, by the processor 20a of the ECU 22 of the control apparatus 2 executing a program in the memory 20b.

In S801, the image acquisition unit 201 acquires, for example, an image in which the outside of the vehicle 1 is captured by the standard camera 40. In S802, the object recognition unit 202 recognizes an object outside the vehicle 1 on the basis of the image acquired by the image acquisition unit 201.

In S803, the risk assessment unit 203 identifies, as a risk target, an object having a risk of coming into proximity with the vehicle 1 among the recognized objects (for example, a passerby). In S804, the notification control unit 205 performs notification control processing to be described later. When the notification control processing is completed, the notification control unit 205 ends the series of operations.

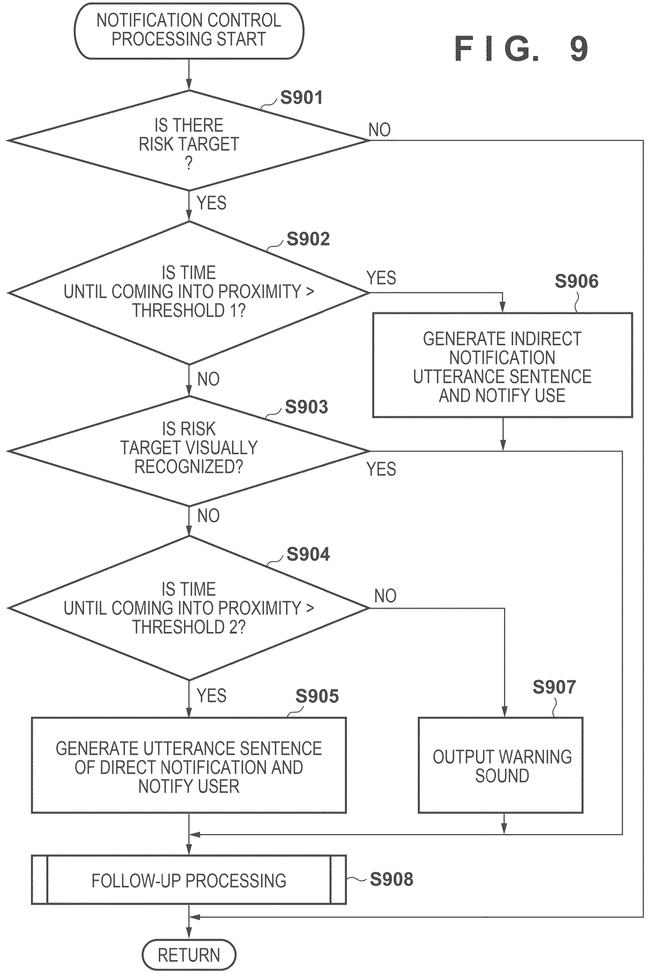

Next, a series of operations according to the notification control processing will be described with reference to FIG. 9. The notification control processing described below is executed by the notification control unit 205.

In S901, the notification control unit 205 determines whether there is a risk target. For example, the notification control unit 205 may determine that there is a risk target when the risk target is identified by the risk assessment unit 203 as described above. When determining that there is a risk target, the notification control unit 205 advances the processing to S902, and otherwise ends the series of operations of the notification control processing. Note that in a case where it is determined that there is no risk target, for example, when the notification control unit 205 determines that there is no risk target although an object in the image is recognized by the object recognition unit 202 (that is, when the risk target is unknown), the processing may proceed to S906 in order to generate an utterance sentence of the indirect notification.

In S902, the notification control unit 205 determines whether the time until the vehicle 1 and the risk target come into proximity is longer than a first time threshold (first time). When determining that the time until the vehicle 1 and the risk target come into proximity is longer than the first time threshold (first time), the notification control unit 205 advances the processing to S906, and otherwise advances the processing to S904. The notification control unit 205 may determine whether the distance until the vehicle 1 and the risk target come into proximity is longer than a first distance threshold (first distance). When determining that the time until the vehicle 1 and the risk target come into proximity is longer than the first distance threshold (first distance), the notification control unit 205 advances the processing to S906, and otherwise advances the processing to S904. The notification control unit 205 generates an utterance sentence of an indirect notification when there is a time or distance grace before coming into proximity with the risk target.

In S903, the notification control unit 205 determines whether the driver visually recognizes the risk target. For example, the notification control unit 205 determines whether the driver visually recognizes the risk target on the basis of the estimation result of whether or not the driver visually recognizes the risk target by the line-of-sight estimation unit 204.

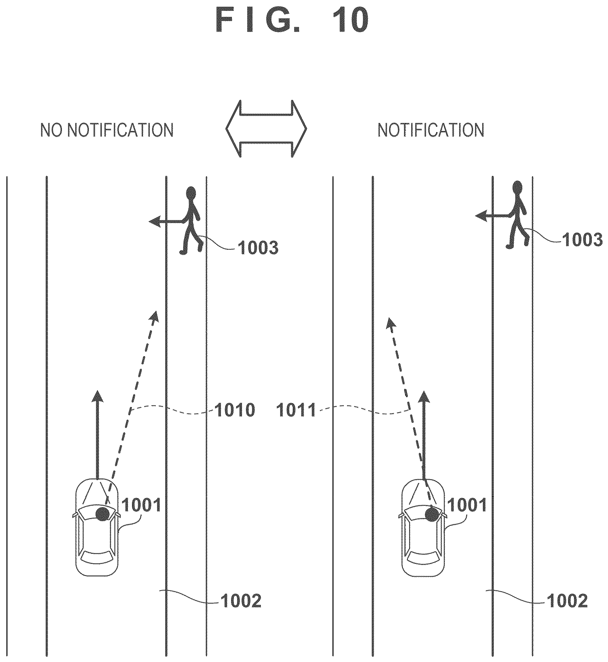

For example, FIG. 10 illustrates a situation in which a passerby 1003 is crossing a road when a vehicle 1001 is traveling on a road 1002. In the example illustrated on the left side of FIG. 10, a line of sight 1010 of the driver is directed toward the passerby 1003, and the driver visually recognizes the passerby 1003 crossing the road 1002. In such a case, the notification control unit 205 determines that the driver visually recognizes the risk target. The notification control unit 205 can be configured not to output a notification when the driver visually recognizes the risk target. By not notifying the driver when the driver already visually recognizes the risk target, unnecessary notification to the driver can be suppressed. On the other hand, in the example illustrated on the right side of FIG. 10, a line of sight 1011 of the driver is not directed toward the passerby 1003, and the driver does not visually recognize the passerby 1003. In such a case, the notification control unit 205 determines that the driver does not visually recognize the risk target. When the driver does not visually recognize the risk target (that is, when there is a high possibility that the driver is not aware of the risk target), the notification control unit 205 advances the processing to output a direct notification or a warning sound. When determining that the driver visually recognizes the risk target, the notification control unit 205 advances the processing to S908, and otherwise advances the processing to S904.

Note that in the example illustrated in FIG. 9, when the driver visually recognizes a risk target, notification is not given. However, the notification control unit 205 may give the user the indirect notification when determining that the driver visually recognizes the risk target. In this case, the notification control unit 205 may advance the processing to S906.

In S904, the notification control unit 205 determines whether the time until the vehicle 1 and the risk target come into proximity is longer than a second time threshold (second time). At this time, the second time threshold is smaller than the first time threshold. When determining that the time until the vehicle 1 and the risk target come into proximity is longer than the second time threshold (second time), the notification control unit 205 advances the processing to S905, and otherwise advances the processing to S907. The notification control unit 205 may determine whether the distance until the vehicle 1 and the risk target come into proximity is longer than a second distance threshold (second distance). At this time, the second distance threshold is smaller than the first distance threshold. When determining that the time until the vehicle 1 and the risk target come into proximity is longer than the second distance threshold (second distance), the notification control unit 205 advances the processing to S905, and otherwise advances the processing to S907.

In S905, the notification control unit 205 generates and selects the direct notification using the configuration of utterance generation of the direct notification described above with reference to FIG. 11, and gives the driver (user) the direct notification. Furthermore, in S906, the notification control unit 205 generates and selects the indirect notification using the configuration of utterance generation of the indirect notification described above, and gives the driver (user) the indirect notification. In S907, the notification control unit 205 outputs a predetermined warning sound.

In S908, the notification control unit 205 executes follow-up processing, and then ends the series of operations of the notification control processing. Details of the follow-up processing will be described later.

As described above, the notification control unit 205 gives the direct notification or the indirect notification on the basis of the identification result of the risk target and the travel state of the risk target and the vehicle. Here, the direct notification includes an expression representing an object and an expression causing the user to start risk avoidance, and the indirect notification includes an expression representing an object but does not include an expression causing the user to start risk avoidance. With this configuration, it is possible to provide an appropriate notification according to the situation.

### <Series of operations of follow-up processing for giving assessment notification>

Next, a series of operations of follow-up processing for giving an assessment notification will be described. The follow-up processing is processing for giving the assessment notification 304 after the notification control unit 205 gives the driver the direct notification or the indirect notification. Note that in the above-described embodiment, a case where an assessment notification 305 is an expression indicating empathy with the user or an expression accepting the user (including an expression praising the user) has been described as an example. However, the assessment notification 305 is not limited to the above-described example, and may include an utterance that calms the user or an utterance that praises the user.

In the following description, a specific example of processing (referred to as follow-up processing) for giving the assessment notification 304 will be described with an example in which the assessment notification 305 includes an utterance that calms the user or an utterance that praises the user.

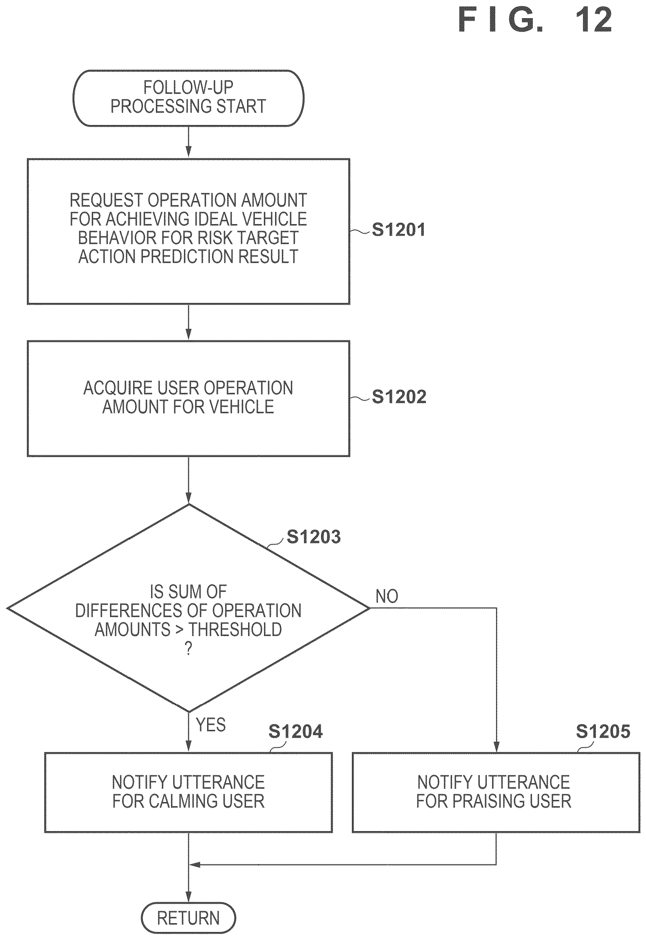

FIG. 12 illustrates an example of the follow-up processing. Note that a series of operations of the follow-up processing is achieved, for example, by the processor 20a of the ECU 22 of the control apparatus 2 executing a program in the memory 20b. Furthermore, the present processing is started in a state where the direct notification or the indirect notification has already been given.

In S1201, the ECU 22 obtains an operation amount for achieving an ideal vehicle behavior for an action prediction result of a risk target. For example, a bicycle that is a risk target is traveling, and there is a parked vehicle in front of the traveling bicycle. In this case, the action prediction of the risk target includes, for example, prediction by the risk assessment unit 203 that the risk target will enter a lane on which the host vehicle travels to avoid the parked vehicle. Additionally, the operation amount for achieving an ideal vehicle behavior includes the ideal operation amount of the steering wheel and the ideal operation amount of the brake in time series for avoiding the risk of collision with the risk target.

In S1202, the ECU 22 acquires the user's operation amount for the vehicle (via one or more ECUs). The user's operation amount includes, for example, an actual operation amount of the steering wheel and an actual operation amount of the brake by the user in time series.

In S1203, the ECU 22 determines whether the sum (in the time direction) of the differences between the operation amount obtained in S1201 and the operation amount acquired in S1202 is larger than a predetermined threshold. When determining that the sum of the differences is larger than the predetermined threshold, the ECU 22 advances the processing to S1204, and otherwise advances the processing to S1205.

In S1204, the notification control unit 205 outputs an utterance that calms the user. The case where the sum of the differences between the operation amount obtained in S1201 and the operation amount acquired in S1202 increases includes a situation where risk avoidance is performed hastily at a timing when the proximity to the risk target increases. The utterance that calms the user includes, for example, an utterance such as "That cyclist really got in the way, didn't they?", "Thank goodness we were able to deal with them riding out in front of us.", or "Cyclists suddenly riding into the street more and more recently is a real problem, isn't it?".

In S1205, the notification control unit 205 outputs an utterance that praises the user. The case where the sum of the differences between the operation amount obtained in S1201 and the operation amount acquired in S1202 becomes small includes a situation where the user has been able to operate the vehicle with a margin from an early stage. The utterance that praises the user includes, for example, an utterance such as "It is impressive that you noticed the risk in advance.", "It was good to let the cyclist go first.", or "It was good that you decelerated in advance.". Upon completion of the processing of S1204 or S1205, the notification control unit 205 ends this series of operations.

In this manner, by performing the follow-up processing, it is possible to output a predetermined notification having different utterance content (in addition to the direct notification or the indirect notification) according to the user's action after the direct notification or the indirect notification is given. In the example illustrated in FIG. 12, the action of the user is assessed on the basis of a difference between the amount of operation for realizing the ideal behavior of the vehicle obtained for the action prediction result of the risk target and the amount of operation by the user for the vehicle.

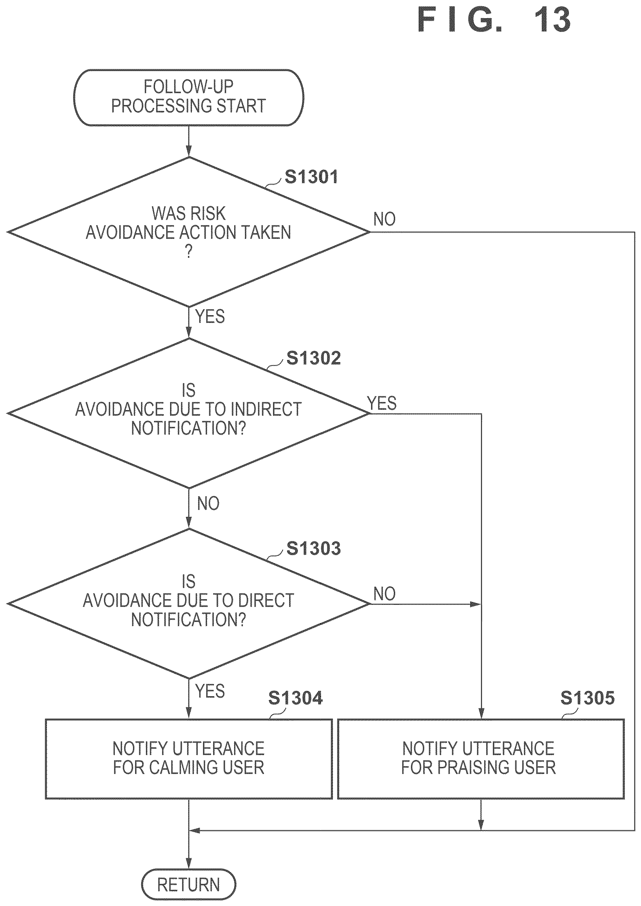

Note that while the follow-up processing described with reference to FIG. 12 uses the case where the utterance content is varied on the basis of the difference in the operation amount as an example, the follow-up processing may be based on another determination. For example, the utterance content may be controlled according to whether the user takes a risk avoidance action after a direct notification or after an indirect notification. An example of such follow-up processing will be described with reference to FIG. 13. Note that a series of operations of the follow-up processing illustrated in FIG. 13 is achieved, for example, by the processor 20a of the ECU 22 of the control apparatus 2 executing a program in the memory 20b.

In S1301, the ECU 22 determines whether the user has taken a risk avoidance action. The determination as to whether or not the user has taken a risk avoidance action can be made using any known technique. For example, the ECU 22 may obtain a time-series operation amount for achieving ideal vehicle behavior for the action prediction result of the risk target, and determine that the user has taken the risk avoidance action when the time-series operation amount of the vehicle by the user is similar to the time-series operation amount for achieving ideal vehicle behavior. When determining that the user has taken the risk avoidance action, the ECU 22 advances the processing to S 1302, and otherwise can end the follow-up processing and return to the original processing.

In S1302, the notification control unit 205 determines whether the risk avoidance action by the user is avoidance due to indirect notification. When the risk avoidance action by the user has been performed within a predetermined time after the indirect notification is given, the notification control unit 205 determines that it is avoidance due to indirect notification and advances the processing to S1305, and otherwise advances the processing to S1303.

In S1303, the notification control unit 205 determines whether the risk avoidance action by the user is avoidance due to direct notification. When the risk avoidance action by the user has been performed after the direct notification is given, the notification control unit 205 determines that it is avoidance due to direct notification and advances the processing to S1304, and otherwise advances the processing to S1305. The case where it is determined that it is not avoidance due to direct notification includes, for example, a case where even though the risk avoidance action is not performed within a predetermined time after the indirect notification is given, the action is performed before the direct notification is given.

In S1304, the notification control unit 205 outputs an utterance that calms the user. An example of the utterance that calms the user is similar to the example described with reference to FIG. 12. In S1305, the notification control unit 205 outputs the utterance that praises the user by the notification control unit 205. An example of the utterance that praises the user is also similar to the example described with reference to FIG. 12. Upon completion of the processing of S1204 or S1205, the notification control unit 205 ends this series of operations. Even when performing such follow-up processing, it is possible to further output a predetermined notification having different utterance content according to the user's action after the direct notification or the indirect notification is given.

### <Summary of embodiments>

1. The control apparatus (for example, 2) according to the above embodiment is a control apparatus disposed in a moving body (for example, 1) including an image capturing device (for example, 40), the control apparatus comprising:
   image acquisition means (for example, 201) for acquiring an image of an outside of the moving body captured by the image capturing device;
   recognition means (for example, 202) for recognizing an object outside the moving body on the basis of the image;
   identification means (for example, 203) for identifying a risk target having a risk of coming into proximity with the moving body among the recognized objects; and
   notification control means (for example, 205) for giving a user a voice notification using a natural language including an expression representing a recognized object, characterized in that
   the notification control means gives the user either a direct notification (for example, 302) for notifying the user of the presence of a risk posed by the risk target or an indirect notification (for example, 301) for notifying the user of information suggesting the risk target, on the basis of the risk target and a traveling state of the moving body.

According to this embodiment, it is possible to provide an appropriate notification according to a situation.

2. In the above embodiment,
when a risk target is identified in an identification result of the risk target, the notification control means gives the indirect notification according to the identified risk target and a traveling state of the moving body.

According to this embodiment, when the warning sound is simply output, the risk content cannot be intuitively understood, and the frequently output warning sound may cause discomfort. On the other hand, this embodiment allows the driving to be continued while grasping the potential risk.

3. In the above embodiment,
the notification control means gives the direct notification when a risk target is identified in an identification result of the risk target and the identified risk target and the moving body satisfy a predetermined proximity condition.

According to this embodiment, although the risk content cannot be intuitively understood by simply outputting a warning sound, the user can specifically grasp a target to be noted and take necessary action with a direct notification.

4. In the above embodiment,
estimation means (for example, 204) for estimating whether or not the user visually recognizes a risk target is comprised, and
the notification control means gives the direct notification when a risk target is identified in an identification result of the risk target and the identified risk target and the moving body satisfy a predetermined proximity condition, and when it is further estimated that the user does not visually recognize the risk target.

According to this embodiment, it is possible to appropriately output a notification when there is a high possibility that the risk target is not noticed.

5. In the above embodiment,
the notification control means performs control not to output the direct notification when a risk target is identified in an identification result of the risk target and the identified risk target and the moving body satisfy a predetermined proximity condition, and when it is further estimated that the user visually recognizes the risk target.

According to this embodiment, by not notifying the user even when the user already visually recognizes the risk target, unnecessary notification to the user can be suppressed.

6. In the above embodiment,
the notification control means gives the indirect notification when a risk target is identified in an identification result of the risk target, and when a time until the identified risk target and the moving body come into proximity is longer than a first time or a distance until the identified risk target and the moving body come into proximity is longer than a first distance, and the notification control means gives the direct notification when the time until the identified risk target and the moving body come into proximity is equal to or shorter than the first time or when the distance until the identified risk target and the moving body come into proximity is equal to or shorter than the first distance.

According to this embodiment, when the time until the risk target and the moving body come into proximity is long, the user can continue driving while grasping the potential risk by the indirect notification, and when the time until the risk target and the moving body come into proximity is short, the user can direct attention to a specific risk target by the direct notification.

7. In the above embodiment,
the notification control means outputs a warning sound when the time until the identified risk target and the moving body come into proximity is equal to or shorter than a second time shorter than the first time, or the distance until the identified risk target and the moving body come into proximity is equal to or shorter than a second distance shorter than the first distance.

According to this embodiment, it is possible to perform intuitive notification of a risk in a scene where the user can grasp a situation and an action to be taken by looking at the traveling direction.

8. In the above embodiment,
the notification control means gives the indirect notification when no risk target is identified in an identification result of the risk target.

According to this embodiment, when the warning sound is simply output, the risk content cannot be intuitively understood, and the frequently output warning sound may cause discomfort. On the other hand, this embodiment allows the driving to be continued while grasping the potential risk.

9. In the above embodiment,
the direct notification includes at least one of an expression representing a position of an object that is the risk target, an expression representing a type of the object that is the risk target, and an expression causing a user to start risk avoidance.

According to this embodiment, the user can specifically grasp a target to be noted and take a necessary action.

10. In the above embodiment,
the direct notification further includes at least one of an expression representing a predicted action of the object and an expression representing a reason for starting the risk avoidance.

According to this embodiment, the user can easily grasp what kind of situation will occur when the driving is continued.

11. In the above embodiment,
the indirect notification includes an expression representing that an object is present as an expression representing an object.

According to this embodiment, it is possible to continue driving while grasping a potential risk.

12. In the above embodiment,
the notification control means includes a large language model that generates utterance content of the indirect notification, and prompt generation means for generating a prompt that is an instruction for the large language model to generate an utterance expressing a risk target, and
the large language model generates the utterance content of the indirect notification on the basis of an image acquired by the image acquisition means and a prompt generated by the prompt generation means.

According to this embodiment, it is possible to generate an indirect notification including natural utterance content by a large language model, and further, it is possible to give an appropriate instruction to obtain desired utterance content from the large language model by inputting a generated prompt.

13. In the above embodiment,
the prompt generation means generates the prompt on the basis of Internet information acquired via the Internet, an attribute of a traffic participant recognized in the image, and information of a position and an attribute of the identified risk target.

According to this embodiment, a prompt based on the latest trend on the Internet can be generated.

14. In the above embodiment,
the identification means includes a trained estimation model that is separate from the large language model, and
the prompt generation means generates the prompt by using information of a position and an attribute of the risk target identified by the identification means that is the estimation model.

According to this embodiment, the generated prompt is refined with respect to the risk target, and the natural language sentence of the indirect notification generated in the large language model (LLM) can be a more natural sentence and an appropriate sentence. As a result, it is possible to suppress generation of a sentence that requires filtering of the indirect notification generated by the LLM, and make the generated indirect notification more appropriate.

15. In the above embodiment,
a second large language model that is separate from the large language model for outputting the Internet information is further comprised, and
the prompt generation means generates the prompt by using at least one of current news on the Internet, trending information, and trending words acquired via the Internet by the second large language model.

According to this embodiment, it is possible to further refine the information input to prompt generation means, and to reduce the ratio of input of noise information or ambiguous information to the prompt generation means. The prompt generation means generates a prompt suitable for generating the indirect notification, so that the natural language sentence of the indirect notification generated by the large language model (LLM) can be made more natural and appropriate. As a result, it is possible to suppress generation of a sentence that requires filtering of the indirect notification generated by the LLM, and make the generated indirect notification more appropriate.

16. In the above embodiment,
the prompt generation means generates the prompt on the basis of an attribute of a traffic participant recognized in the image and information of a position and an attribute of the identified risk target, and
the large language model generates the utterance content of the indirect notification on the basis of Internet information (for example, including at least one of current news on the Internet, trending information, and trending words) acquired via the Internet, an image acquired by the image acquisition means, and a prompt generated by the prompt generation means.

According to this embodiment, the large language model can generate utterance content based on the latest trend on the Internet.

17. In the above embodiment,
the notification control means excludes utterance content that does not satisfy a predetermined condition from utterance content items of a plurality of the indirect notifications generated by the large language model.

According to this embodiment, it is possible to extract only appropriate utterance content as the indirect notification from among a plurality of utterance content items generated by the large language model.

18. In the above embodiment,
the notification control means further outputs a predetermined notification having different utterance content according to an action of the user after the direct notification or the indirect notification is given.

According to this embodiment, the acceptability of the user to the notification can be enhanced.

19. In the above embodiment,
the action of the user is assessed on the basis of a difference between an operation amount for achieving a behavior of a moving body that is obtained with respect to the action prediction result of the risk target, and an operation amount for the moving body by the user.

According to this embodiment, it is possible to notify the user of an utterance according to the appropriateness or inappropriateness of an operation performed by the user for risk avoidance.

20. In the above embodiment,
the notification control means further outputs the predetermined notification including an expression for assessing an action of the user after giving the user the direct notification or the indirect notification.

According to this embodiment, it is possible to give feedback on risk avoidance to the user.

21. In the above embodiment,
the predetermined notification includes an expression indicating empathy with the user or an expression accepting the user.

According to this embodiment, after the direct notification or the indirect notification is given, it is possible to output a user-oriented assessment notification.

22. In the above embodiment,
the notification control means outputs a calming utterance when the user takes an action of risk avoidance after giving the direct notification, and outputs a praising utterance when the user takes an action of risk avoidance after giving the indirect notification.

According to this embodiment, in a situation where the user tends to feel negative due to direct notification, it is possible to output an utterance that calms the user's feeling. Furthermore, when the presence of an object to be noted is recognized from the stage of indirect notification, that is, from a relatively early stage and a risk is avoided, an utterance that makes the user feel positive can be provided.

23. In the above embodiment,
a moving body that includes the control apparatus is provided.

According to this embodiment, it is possible to provide a moving body capable of providing an appropriate notification according to a situation.

The invention is not limited to the foregoing embodiments, and various variations/changes are possible within the spirit of the invention.

### REFERENCE SIGNS LIST

1 Vehicle
2 Control apparatus
21 to 29 ECU

## Claims

1. A control apparatus disposed in a moving body including an image capturing device, the control apparatus comprising:
image acquisition means for acquiring an image of an outside of the moving body captured by the image capturing device;
recognition means for recognizing an object outside the moving body on the basis of the image;
identification means for identifying a risk target having a risk of coming into proximity with the moving body among the recognized objects; and
notification control means for giving a user a voice notification using a natural language including an expression representing a recognized object, **characterized in that**
the notification control means gives the user either a direct notification for notifying the user of the presence of a risk posed by the risk target or an indirect notification for notifying the user of information suggesting the risk target, on the basis of the risk target and a traveling state of the moving body.

2. The control apparatus according to claim 1, **characterized in that** when a risk target is identified in an identification result of the risk target, the notification control means gives the indirect notification according to the identified risk target and a traveling state of the moving body.

3. The control apparatus according to claim 1, **characterized in that** the notification control means gives the direct notification when a risk target is identified in an identification result of the risk target and the identified risk target and the moving body satisfy a predetermined proximity condition.

4. The control apparatus according to claim 1, further comprising estimation means for estimating whether or not the user visually recognizes a risk target, **characterized in that**
the notification control means gives the direct notification when a risk target is identified in an identification result of the risk target and the identified risk target and the moving body satisfy a predetermined proximity condition, and when it is further estimated that the user does not visually recognize the risk target.

5. The control apparatus according to claim 4, **characterized in that** the notification control means performs control not to output the direct notification when a risk target is identified in an identification result of the risk target and the identified risk target and the moving body satisfy a predetermined proximity condition, and when it is further estimated that the user visually recognizes the risk target.

6. The control apparatus according to claim 1, **characterized in that** the notification control means gives the indirect notification when a risk target is identified in an identification result of the risk target, and when a time until the identified risk target and the moving body come into proximity is longer than a first time or a distance until the identified risk target and the moving body come into proximity is longer than a first distance, and the notification control means gives the direct notification when the time until the identified risk target and the moving body come into proximity is equal to or shorter than the first time or when the distance until the identified risk target and the moving body come into proximity is equal to or shorter than the first distance.

7. The control apparatus according to claim 6, **characterized in that** the notification control means outputs a warning sound when the time until the identified risk target and the moving body come into proximity is equal to or shorter than a second time shorter than the first time, or the distance until the identified risk target and the moving body come into proximity is equal to or shorter than a second distance shorter than the first distance.

8. The control apparatus according to claim 1, **characterized in that** the notification control means gives the indirect notification when no risk target is identified in an identification result of the risk target.

9. The control apparatus according to claim 1, **characterized in that** the direct notification includes at least one of an expression representing a position of an object that is the risk target, an expression representing a type of the object that is the risk target, and an expression causing a user to start risk avoidance.

10. The control apparatus according to claim 9, **characterized in that** the direct notification further includes at least one of an expression representing a predicted action of the object and an expression representing a reason for starting the risk avoidance.

11. The control apparatus according to claim 1, **characterized in that** the indirect notification includes an expression representing that an object is present as an expression representing an object.

12. The control apparatus according to claim 1, **characterized in that**
the notification control means includes a large language model that generates utterance content of the indirect notification, and prompt generation means for generating a prompt that is an instruction for the large language model to generate an utterance expressing a risk target, and
the large language model generates the utterance content of the indirect notification on the basis of an image acquired by the image acquisition means and a prompt generated by the prompt generation means.

13. The control apparatus according to claim 12, **characterized in that** the prompt generation means generates the prompt on the basis of Internet information acquired via the Internet, an attribute of a traffic participant recognized in the image, and information of a position and an attribute of the identified risk target.

14. The control apparatus according to claim 12, **characterized in that**
the identification means includes a trained estimation model that is separate from the large language model, and
the prompt generation means generates the prompt by using information of a position and an attribute of the risk target identified by the identification means that is the estimation model.

15. The control apparatus according to claim 13, further comprising a second large language model that is separate from the large language model for outputting the Internet information, **characterized in that**
the prompt generation means generates the prompt by using information acquired via the Internet by the second large language model.

16. The control apparatus according to claim 12, **characterized in that**
the prompt generation means generates the prompt on the basis of an attribute of a traffic participant recognized in the image and information of a position and an attribute of the identified risk target, and
the large language model generates the utterance content of the indirect notification on the basis of Internet information acquired via the Internet, an image acquired by the image acquisition means, and a prompt generated by the prompt generation means.

17. The control apparatus according to claim 12, **characterized in that** the notification control means excludes utterance content that does not satisfy a predetermined condition from utterance content items of a plurality of the indirect notifications generated by the large language model.

18. The control apparatus according to claim 1, **characterized in that** the notification control means further outputs a predetermined notification having different utterance content according to an action of the user after the direct notification or the indirect notification is given.

19. The control apparatus according to claim 18, **characterized in that** the action of the user is assessed on the basis of a difference between an operation amount for achieving a behavior of a moving body that is obtained with respect to the action prediction result of the risk target, and an operation amount for the moving body by the user.

20. The control apparatus according to claim 18, **characterized in that** the notification control means further outputs the predetermined notification including an expression for assessing an action of the user after giving the user the direct notification or the indirect notification, and the predetermined notification includes an expression indicating empathy with the user or an expression accepting the user.

21. The control apparatus according to claim 18, **characterized in that** the notification control means outputs a calming utterance when the user takes an action of risk avoidance after giving the direct notification, and outputs a praising utterance when the user takes an action of risk avoidance after giving the indirect notification.

22. A control method including steps performed by a control apparatus disposed in a moving body including an image capturing device, the control method comprising:
acquiring an image of an outside of the moving body captured by the image capturing device;
recognizing an object outside the moving body on the basis of the image;
identifying a risk target having a risk of coming into proximity with the moving body among the recognized objects; and
giving a user a voice notification using a natural language including an expression representing a recognized object, wherein
the giving a notification includes giving the user either a direct notification for notifying the user of the presence of a risk posed by the risk target or an indirect notification for notifying the user of information suggesting the risk target, on the basis of the risk target and a traveling state of the moving body.
